# EUROPEAN PATENT SPECIFICATION

(11) **EP 2 821 125 B1**
(45) Date of publication and mention of the grant of the patent: **03.05.2017**
(21) Application number: 13755422.6
(22) Date of filing: 15.02.2013
(51) Int. Cl.: B01D 69/10, B01D 71/48, D21H 13/24, D04H 1/435, D04H 1/55, D04H 1/64, D21H 25/04

(54) **NONWOVEN FABRIC FOR SEMIPERMEABLE MEMBRANE SUPPORTING BODY AND METHOD FOR MANUFACTURING SAME**
VLIESSTOFF FÜR SUBSTRATKÖRPER FÜR HALBDURCHLÄSSIGE MEMBRAN UND HERSTELLUNGSVERFAHREN DAFÜR
TISSU NON-TISSÉ POUR CORPS SUPPORTANT UNE MEMBRANE SEMI-PERMÉABLE ET SON PROCÉDÉ DE FABRICATION

(30) Priority: 01.03.2012 JP 2012045398
(43) Date of publication of application: 07.01.2015
(73) Proprietor: Hokuetsu Kishu Paper Co., Ltd., Nagaoka-shi Niigata 940-0027 (JP)
(72) Inventor: SOYAMA, Toshihiko, Nagaoka-shi Niigata 940-0027 (JP); NEMOTO, Junji, Nagaoka-shi Niigata 940-0027 (JP); HAMABE, Hisashi, Tokyo 103-0021 (JP)
(74) Representative: Michalski Hüttermann & Partner Patentanwälte mbB
(86) International application number: PCT/JP2013/053715
(87) International publication number: WO 2013/129141

(56) References cited:
- EP-A1- 2 615 206
- EP-A1- 2 659 955
- WO-A1-2011/049231
- CA-A1- 1 098 771
- JP-A- 2009 233 666

## Description

### TECHNICAL FIELD

The present invention relates to a nonwoven fabric, and more particularly, to a nonwoven fabric for semipermeable membrane supporting body intended for serving as a supporting body for membrane production and reinforcing a semipermeable membrane in the production of a semipermeable membrane having an isolating function, such as an ultrafiltration membrane, a precision filtration membrane, or a reverse osmosis (RO) membrane, and a method for manufacturing the same.

### BACKGROUND ART

Semipermeable membranes are widely used for the removal of impurities in beverages/industrial water, desalination of seawater, removal of saprophytic bacteria in foodstuffs, and a waste water treatment, or in the field of biochemistry and the like.

For the semipermeable membranes, various polymers such as a cellulose-based resin, a polyvinyl alcohol-based resin, a polysulfone-based resin, a polyamide-based resin, a polyimide-based resin, a polyacrylonitrile-based resin, a polyester-based resin, and a fluororesin are selected in accordance with the use. However, the semipermeable membrane itself has weak strength, and cannot endure a high pressure such as 1 MPa to 10 MPa or more when used alone in ultrafiltration, reverse osmosis or the like. Thus, products in the form of having a semipermeable membrane formed by applying a resin liquid for a semipermeable membrane on one surface of a supporting body having high strength and high liquid permeability, such as a nonwoven fabric or a woven fabric, are in use. Many production apparatuses that are configured to conduct continuous coating on one surface of an elongated supporting body such as a roll are industrially adopted. In the present invention, the surface of a supporting body on which a semipermeable membrane is to be coated is also referred to as "surface for coating a semipermeable membrane" or "semipermeable membrane-coated surface", or simply referred to as "coated surface".

However, the resin contracts when a resin liquid for a semipermeable membrane is coated on the supporting body and the resin is then cured, and thus so-called "MD curl", which is bending in the width direction about the flow direction (machine direction; MD) of the production apparatus as an axis, easily arises in the supporting body on which a semipermeable membrane has been formed. This MD curl causes problems in quality, for example, the MD curl affects the processability by causing trouble on the apparatus and stops the apparatus, or the like, when the semipermeable membrane is processed into a module, leakage arises in a product module, and the like.

In order to solve the problems, a semipermeable membrane supporting body, which is a nonwoven fabric including a primary fiber formed of a synthetic resin fine fiber and a binder fiber, and is produced by papermaking and subsequent heating and pressurization processings, wherein the tensile strength ratio of the papermaking flow direction to the width direction is from 2 : 1 to 1 : 1, has been suggested (see, for example, Patent Literature 1).

Furthermore, a separation membrane supporting body including a nonwoven fabric, wherein the fibers disposed on the membrane-formed surface side of the separation membrane are directed more laterally than the fibers disposed on the side of the non-membrane-formed surface of the separation membrane has been suggested (see, for example, Patent Literature 2). Furthermore, a method for producing a separation membrane supporting body including a nonwoven fabric, including a step of heating a nonwoven fabric having a shrinkage rate in boiled water in the width direction (transverse direction) of the nonwoven fabric of 0.1 to 5.0% to a temperature of from 60 to 200°C to widen the width by 1.01 to 1.05 times in the width direction (transverse direction) has been suggested (see, for example, Patent Literature 3).

Furthermore, a polyester thermocompression-bonded nonwoven fabric useful in the fields of water filter supporting bodys, which is a thermocompression-bonded nonwoven fabric formed by thermocompression bonding of a nonwoven fabric web including, as primary components, a polyester primary fiber formed of a stretched yarn, and a polyester binder fiber that is an unstretched yarn or a low melting point yarn having a lower melting point than that of the primary fiber, wherein the polyester primary fiber is a molten liquid crystalline, fully aromatic polyester fiber having a melting point of 290°C or more, and the polyester binder fiber is a molten liquid crystalline, fully aromatic polyester fiber having a melting point of 290°C or less, has been suggested (see, for example, Patent Literature 4).

Furthermore, a separation membrane supporting body composed of a stacked nonwoven fabric in which a surface layer to be a resin-coated surface, a medium layer and a rear surface layer are integrated by thermocompression bonding, wherein the surface layer is a thermoplastic resin long filament layer having a fiber diameter of from 7 to 30 µm, the medium layer is a layer formed of a melt blow fiber having a fiber diameter of 5 µm or less, and the rear surface layer is a thermoplastic resin long filament layer having a fiber diameter of from 7 to 20 µm has been suggested (see, for example, Patent Literature 5).

Furthermore, a sheet-like article used as a separation membrane supporting body, which has a multilayer structure constituted by including an upper layer and a lower layer, wherein the upper layer is a nonwoven fabric including a primary fiber formed of a synthetic fiber, and the lower layer is a pulp sheet containing pulp for papermaking, has been suggested (see, for example, Patent Literature 6).

### CITATION LIST

### PATENT LITERATURE

Patent Literature 1: JP 2002-95937 A
Patent Literature 2: JP 2011-161344 A
Patent Literature 3: JP 2011-212602 A
Patent Literature 4: JP 2004-100047 A
Patent Literature 5: WO 2006/068100 A
Patent Literature 6: JP 2009-178915 A
Patent Literature 7: CA 1098771 describes a non-woven material which is particularly suitable for backing or supporting a semipermeable membrane at least one surface of which has an openstructured, continuous, calendered coating of fine thermoplastic particles.
Patent Literature 8: EP 2659955 describes a uniform semipermeable membrane supporting body which does not cause any defect in the semipermeable membrane coating layer when a semipermeable membrane coating liquid is applied, and is free of low density defects.
Patent Literature 9: EP 2615206 describes a nonwoven fabric comprising a PPS fiber, the nonwoven fabric being obtainable by a process for papermaking and having a front surface with a water contact angle greater than that of a back surface of the nonwoven fabric by 5 DEG or more.

### SUMMARY OF INVENTION

### TECHNICAL PROBLEM

The technology of Patent Literature 1 has a problem that since it is not easy to control the tensile strength ratio by the papermaking machine, MD curl arises in many cases even this method is conducted.

The technologies of Patent Literatures 2 and 3 have a problem that a special apparatus is required for achieving these, and thus the problem of MD curl cannot be easily solved.

Patent Literatures 4 to 6 have suggested improving the strength and size stability of the supporting body, preventing permeation-through during the production of the membrane, and improving the integrity with the coating resin, but have not indicated at all the solution to the MD curl during the curing of the coated membrane.

As a nonwoven fabric for semipermeable membrane supporting body, an easy solution method that makes the MD curl during the curing of the membrane fine is required. An object of the present invention is to provide a nonwoven fabric for semipermeable membrane supporting body that provides fine MD curl when a semipermeable membrane coating liquid is coated on the supporting body and cured, and a method for producing the nonwoven fabric.

### SOLUTION TO PROBLEM

The object is solved by the features of the independent claims. Preferred embodiments are defined by the features of the dependent claims.

A nonwoven fabric for semipermeable membrane supporting body according to the present invention is a nonwoven fabric containing organic synthetic fibers as a primary component, wherein a semipermeable membrane is to be supported by one surface of the nonwoven fabric, wherein when the nonwoven fabric on which a semipermeable membrane is to be coated is separated into a layer on the side of the semipermeable membrane-coated surface and a layer on the side of the non-semipermeable membrane-coated surface by delaminating the nonwoven fabric into two layers in the thickness direction, the layer on the side of the semipermeable membrane-coated surface is 35% by mass or more and 70% by mass or less with respect to the total of the layer on the side of the semipermeable membrane-coated surface and the layer on the side of the non-semipermeable membrane-coated surface.

In regard to the nonwoven fabric for semipermeable membrane supporting body according to the present invention, the nonwoven fabric is preferably a wet laid nonwoven fabric. According to such constitution, air permeability of the middle layer of the nonwoven fabric is likely to be increased, and the adhesion of the semipermeable membrane to the supporting body (an anchor effect) is likely to be increased.

In regard to the nonwoven fabric for semipermeable membrane supporting body according to the present invention, it is preferable that the nonwoven fabric before being subjected to hot press processing has a single layer structure. According to such constitution, when hot press processing is carried out using a thermal calendar, the way of heat propagation is uniform, and accordingly the delamination portion is easily controlled by the processing condition.

In regard to the nonwoven fabric for semipermeable membrane supporting body according to the present invention, it is preferable that when the nonwoven fabric on which a semipermeable membrane is to be coated is sectioned in the thickness direction into a coated layer region on the side on which a semipermeable membrane is to be disposed, a middle layer region, and a non-coated layer region that is opposite to the surface on which a semipermeable membrane is to be disposed, the degree of thermal melting of the organic synthetic fibers in the middle layer region is lower than the degree of thermal melting of the organic synthetic fibers in the coated layer region and the non-coated layer region.

In regard to the nonwoven fabric for semipermeable membrane supporting body according to the present invention, any surface of the nonwoven fabric may be the surface for coating a semipermeable membrane.

In regard to the nonwoven fabric for semipermeable membrane supporting body according to the present invention, it is preferable that the fibers incorporated into the nonwoven fabric be organic synthetic fibers.

The nonwoven fabric for semipermeable membrane supporting body according to the present invention includes an embodiment in which the organic synthetic fibers include a main constituent fiber, and the main constituent fiber is one kind of polyester main constituent fiber.

The method for producing a nonwoven fabric for semipermeable membrane supporting body according to the present invention including a nonwoven fabric containing organic synthetic fibers as a primary component, wherein a semipermeable membrane is to be supported by one surface of the nonwoven fabric, includes the steps of: subjecting a fiber slurry containing the organic synthetic fibers to papermaking to give a wet paper, drying the wet paper by a dryer to give a continuous rolled base paper, and subjecting the base paper to hot press processing, in which a difference in surface temperatures is preset between a top roll and a bottom roll of a thermal calendar apparatus, and the side of the surface of the wet paper that has received a more heat quantity from the dryer after the time when the wet paper has been put into a completely dried state in the drying of the wet paper by the dryer is brought into contact with the roll preset to a lower temperature, to give a nonwoven fabric, wherein the relationship between the heat quantity provided to the surface of the base paper and the heat quantity provided to the rear surface when the hot press processing is conducted satisfies Condition 1:
(Condition 1) when the nonwoven fabric is separated into a layer on the side of the semipermeable membrane-coated surface and a layer on the side of the non-semipermeable membrane-coated surface by delaminating the nonwoven fabric into two layers in the thickness direction, the layer on the side of the semipermeable membrane-coated surface is 35% by mass or more and 70% by mass or less with respect to the total of the layer on the side of the semipermeable membrane-coated surface and the layer on the side of the non-semipermeable membrane-coated surface.

In regard to the method for producing a nonwoven fabric for semipermeable membrane supporting body according to the present invention, it is preferable that when the nonwoven fabric on which a semipermeable membrane is to be coated is sectioned in the thickness direction into a coated layer region on the side on which a semipermeable membrane is to be disposed, a middle layer region, and a non-coated layer region that is opposite to the surface on which a semipermeable membrane is to be disposed, the degree of thermal melting of the organic synthetic fibers in the middle layer region is lower than the degree of thermal melting of the organic synthetic fibers in the coated layer region and the non-coated layer region.

### EFFECT OF THE INVENTION

When a nonwoven fabric is separated into two layers by delamination, the delamination portion is a region having weak physical strength (hereinafter sometimes simply referred to as "strength") when comparison is made in the thickness direction of a nonwoven fabric for semipermeable membrane supporting body (hereinafter this region is referred to as "middle layer region"). When the degree of thermal melting of the fibers on the top and rear surfaces of the nonwoven fabric and the degree of the thermal melting of the fibers in the middle layer region are compared, the degree of the thermal melting of the fibers in the middle layer region is lower, and thus the middle layer region is in "semi-molten state". Therefore, since the middle layer region is in a semi-molten state, the airspaces among the fibers are larger than those of the portions on the top and rear surfaces of the nonwoven fabric, and thus a semipermeable membrane coating liquid easily permeates. As a result thereof, when the semipermeable membrane coating liquid is coated on the nonwoven fabric, the coating liquid that has permeated into the nonwoven fabric layer remains much in the middle layer region. As a result thereof, when the coating liquid is cured, the shrinkage of the semipermeable membrane on the surface layer of the coated surface conforms to the shrinkage of the semipermeable membrane in the nonwoven fabric layer as a supporting body, and thus MD curl can be prevented. Accordingly, it has become possible to produce an unprecedented nonwoven fabric for semipermeable membrane supporting body.

### DESCRIPTION OF EMBODIMENTS

Hereinafter, the present invention will be described in detail by way of exemplary embodiments, but the present invention is not intended to be construed to be limited by these descriptions. As long as the effect of the present invention is provided, the exemplary embodiments may include various modifications.

The nonwoven fabric for semipermeable membrane supporting body according to the present exemplary embodiment is a nonwoven fabric containing organic synthetic fibers as a primary component, wherein a semipermeable membrane is to be supported by one surface of the nonwoven fabric, wherein when the nonwoven fabric on which a semipermeable membrane is to be coated is separated into a layer on the side of the semipermeable membrane-coated surface and a layer on the side of the non-semipermeable membrane-coated surface by delaminating the nonwoven fabric into two layers in the thickness direction, the layer on the side of the semipermeable membrane-coated surface is 35% by mass or more and 70% by mass or less with respect to the total of the layer on the side of the semipermeable membrane-coated surface and the layer on the side of the non-semipermeable membrane-coated surface. Namely, the mass ratio of the layer on the side of the semipermeable membrane-coated surface and the layer on the side of the non-semipermeable membrane-coated surface is in the range from 35 : 65 to 70 : 30.

The organic synthetic fibers, which are primary constituent element of the nonwoven fabric that serves as a semipermeable membrane supporting body, can be divided into a main constituent fiber and a binder fiber.

Examples of the main constituent fiber include fibers spun from synthetic resins such as polyethylene, polypropylene, polyacrylate, polyester, polyurethane, polyvinyl chloride, polyvinylidene chloride, polyethylene fluoride, polyaramid, polyimide, polyacrylonitrile, and nylon. Furthermore, regenerated celluloses such as rayon; cellulose derivatives such as cellulose acetate and nitrocellulose; pulp of synthetic resins such as polyethylene, polypropylene, acrylic and aramid, or fibers produced from natural products as the raw material sources, such as polylactic acid, polybutyric acid and polysuccinic acid, which are being actively studied in recent years for biochemical applications, are also included in the scope of the organic synthetic fibers. Among the synthetic fibers described above, polyester fibers are suitably used in view of heat resistance, chemical resistance, fiber diameter, the abundance of the kind of properties, or the like. Here, in the present embodiment, among the organic synthetic fibers, an organic synthetic fiber which is not intended for melt adhesion at a low temperature and has a conventional melting point, for example, a melting point of 140°C to 300°C, is referred to as "main constituent fiber." Depending on the shape of the main constituent fiber, when a fiber having a fine fiber diameter is used, the pore diameter of a completed sheet is further decreased, and when a fiber having a large fiber diameter is used, the strength of the sheet is increased. When a short fiber is used, dispersibility in water during a wet papermaking process is enhanced, and when a long fiber is used, the strength of the sheet is increased. In the present exemplary embodiment, a synthetic fiber having a fiber thickness of 0.05 decitex to 5.0 decitex, and preferably 0.1 decitex to 3.0 decitex, and having a length of 1 mm to 8 mm, and preferably a length in the range of 3 mm to 6 mm, is suitably used. Furthermore, the cross-sectional shape of the fiber can be appropriately selected as necessary, and is not limited in the present exemplary embodiment.

A binder fiber is mixed with the main constituent fiber for the purpose of enhancing the strength properties of manufactured products, or maintaining a sufficient sheet strength between a sheet-forming process and a winding process. Here, the "binder fiber" refers to an organic synthetic fiber in which the melting point of the fiber as a whole or the fiber surface (sheath portion) is lower by about 20°C, or by 20°C or more, than the melting point of the main constituent fiber, and has an effect in which the fiber surface or the fiber as a whole undergoes melt adhesion as a result of heating by a drying process after papermaking or a thermal pressing process, and thereby physical strength is imparted to the sheet.

Regarding the binder fiber, there are available a type in which the entire constituent resin has a low melting point, and a type having a double structure having an inner side and an outer side, that is, a so-called core-sheath structure, in which only the surface is fused, and all of these can be used in the present exemplary embodiment. Suitably, an unstretched polyester fiber having a melting point of about 200°C to 230°C is used. Furthermore, the fiber thickness, length, shape of the cross-section, and the like can be selected according to the purpose, similarly to the main constituent fiber. For example, according to the present exemplary embodiment, a binder fiber having a fiber thickness of 0.1 decitex to 5.0 decitex, and preferably 0.5 decitex to 3.0 decitex, and a length of 1 mm to 8 mm, and preferably a length in the range of 3 mm to 6 mm, is suitably used. It is preferable that the binder resin have a resin composition which is the same as or close to the resin composition of the main constituent fiber; however, different kinds of resin compositions can also be used in accordance with the required characteristics. Furthermore, a vinylon binder fiber having a characteristic of melting under humid and hot conditions is also suitably used.

The present exemplary embodiment includes a case in which only a main constituent fiber is incorporated as an organic synthetic fiber, and a case in which both a main constituent fiber and a binder fiber are incorporated. In the present exemplary embodiment, the ratio (mass ratio) of the main constituent fiber and the binder fiber is preferably in the range of main constituent fiber : binder fiber = 100 : 0 to 50 : 50. When a sheet containing only a synthetic fiber that serves as the main constituent fiber, without any binder fiber mixed therein, is subjected to hot press processing, strands of the main constituent fiber can be caused to melt-adhere with each other; however, since the main constituent fiber is not intended for melt adhesion at a low temperature, it is necessary to raise the heating temperature at the time of hot press processing to a temperature close to the melting point of the main constituent fiber. When a binder fiber is incorporated into the main constituent fiber, fiber strands can be caused to melt-adhere with each other at a temperature lower than the melting point of the main constituent fiber. However, if the ratio of the binder fiber is more than 50%, since the physical strength of the binder fiber itself is weaker than the physical strength of the main constituent fiber, the physical strength of the sheet is decreased.

Among the fibers to be incorporated, the organic synthetic fibers are employed as the main constituent fiber of the nonwoven fabric by adjusting the mixing ratio of the organic synthetic fibers to 50% or more, and preferably 70% or more. At this time, if necessary, pulp-like raw materials, for example, cellulose-based pulp such as wood pulp for papermaking or cotton linter; inorganic fibers such as glass fiber, silica fiber and alumina fiber; inorganic filler materials such as calcium carbonate, talc and kaolin; or the like can also be incorporated in addition to the organic synthetic fibers.

Regarding the nonwoven fabric for semipermeable membrane supporting body, for example, a wet laid nonwoven fabric that is produced by a wet papermaking method is used. Alternatively, a dry type nonwoven fabric can also be used. Among these, according to the present embodiment, a wet laid nonwoven fabric provides the effect of the present invention more effectively than a dry type nonwoven fabric. This is because the air permeability of the middle layer is likely to be increased, and the adhesion of the semipermeable membrane to the nonwoven fabric (an anchor effect) is likely to be exhibited, in the wet laid nonwoven fabric that contains cut short staple organic synthetic fibers as a major constitutional factor as compared to a dry type nonwoven fabric containing continuous long filament organic synthetic fibers as a major constitutional factor.

The method for producing a nonwoven fabric for semipermeable membrane supporting body in the case when a wet laid nonwoven fabric is used is, for example, as follows. The method includes the steps of: (1) subjecting a fiber slurry containing the organic synthetic fibers to papermaking to give a wet paper, (2) drying the wet paper by a dryer to give a continuous rolled base paper, and (3) subjecting the base paper to hot press processing, in which a difference in surface temperatures is preset between a top roll and a bottom roll of a thermal calendar apparatus, and the side of the surface of the wet paper that has received a more heat quantity from the dryer after the time when the wet paper has been put into a completely dried state in the drying of the wet paper by the dryer is brought into contact with the roll preset to a lower temperature, to give a nonwoven fabric. Furthermore, the relationship between the heat quantity provided to the surface of the base paper and the heat quantity provided to the rear surface when the hot press processing is conducted satisfies Condition 1.

(Condition 1) When the nonwoven fabric is separated into a layer on the side of the semipermeable membrane-coated surface and a layer on the side of the non-semipermeable membrane-coated surface by delaminating the nonwoven fabric into two layers in the thickness direction, the layer on the side of the semipermeable membrane-coated surface is 35% by mass or more and 70% by mass or less with respect to the total of the layer on the side of the semipermeable membrane-coated surface and the layer on the side of the non-semipermeable membrane-coated surface.

The nonwoven fabric before being subjected to a hot press processing is such that the effect of the present invention is exhibited by any of a single layer structure or a multilayer structure having two or more layers superimposed. A nonwoven fabric having a multilayer structure before being subjected to hot press processing may be formed of the same raw material in all the layers, or may be formed from different raw materials, as long as the effect of the present invention is not impaired. Furthermore, even with the same raw material, the fiber diameter and the fiber length of the organic synthetic fibers can be changed. However, since the way of heat propagation is uniform in hot press processing by a thermal calendar, the delamination portion is easily controlled by the processing condition, and thus a single layer structure is more preferable. In a multilayer structure of two or more layers, the way of heat propagation may change on a fault part where the layers are contacting to each other, and the control of the delamination portion may work wrongly.

Regarding the method for producing a wet laid nonwoven fabric, a so-called wet papermaking method in which organic synthetic fibers as raw materials are dispersed in water, subsequently the fibers are laminated on a papermaking wire, dehydrating the fibers through the lower part of the wire, and thereby forming a sheet, is used. Among others, a wet laid nonwoven fabric according to a wet papermaking method is particularly preferred because the network of constituent fibers is likely to be formed more uniformly than a dry type nonwoven fabric. The kind of the papermaking machine used in the wet papermaking method is not limited in the present exemplary embodiment, and for example, a single-sheet papermaking apparatus, or in the case of a continuous papermaking machine, a Fourdrinier papermaking machine, a short wire papermaking machine, a cylindrical wire papermaking machine, an inclined wire papermaking machine, a gap former, and a delta former can be used.

Since a sheet obtained after papermaking contains a large amount of water, the sheet is dried in a drying zone. The drying method used at this time is not particularly limited, but hot air drying, infrared drying, drum drying, drying by a multiple cylinder dryer drying and the like are suitably used. The drying temperature is desirably 100°C to 160°C, and more desirably 105°C to 140°C.

A wet laid nonwoven fabric or a dry type nonwoven fabric produced by the methods described above may be used directly as a semipermeable membrane supporting body, but in many cases, the strength as a semipermeable membrane supporting body is insufficient. Thus, in order to obtain a strength sufficient for a semipermeable membrane supporting body, fibers are thermally welded by subjecting the fibers to hot press processing at a temperature near the melting point of the main constituent fiber, or a temperature near the melting point of the binder fiber, and thereby strength is increased. This treatment is carried out using various hot press processing apparatuses, but generally, a thermal calender apparatus is effective. For example, a method of using a metal roll nip calender that is capable of processing at a temperature of 160°C or higher can be used, or if a resin roll having high heat resistance is available, a metal roll/resin roll soft nip calender can also be used.

The temperature conditions for the hot press processing is generally preferably in the range of 160°C to 260°C, and more preferably in the range of 180°C to 240°C; however, depending on the kind of the synthetic fibers used, a lower temperature or a higher temperature may be desirable. For example, when a binder fiber is incorporated into a main constituent fiber, the fibers are thermally welded by subjecting the fibers to hot press processing at a temperature near the melting point of the binder fiber, and thereby strength is increased. The linear pressure is not particularly limited, but the linear pressure is preferably in the range from 50 to 250 kN/m, more preferably in the range from 100 to 200 kN/m. Furthermore, in order to express a homogeneous performance by the entirety of the web, it is desirable to treat under a temperature profile and a linear pressure profile that are homogeneous as possible. The roll diameter of the thermal calendar apparatus is suitably selected depending on parameters such as a base material to be subjected to hot press processing, the nip pressure and the speed. In the case when only the primary fiber is used without incorporating the binder fiber, the hot press processing is conducted at a temperature around the melting point of the primary fiber.

For the plural processings in the hot press processing, the same hot press apparatus may be repeatedly used for the first processing and the second processing and subsequent processings, and a method in which the processings are continuously conducted by disposing plural hot press apparatuses, or a calendar apparatus in which thermal calendar rolls are disposed on multiple stages in the height direction can also be used. The processing temperatures for the first processing and the second and subsequent processings are preferably such that the temperatures for the second and subsequent processings are equal to or higher than the temperature for the first processing.

In the case when the processing temperatures for the second and subsequent processings are preset to be higher than the processing temperature for the first processing, it is preferable that the hot press processing temperatures for the second and subsequent processings are 10°C or more higher, more preferably 13°C or more higher, further preferably 15°C or more higher, than the temperature for the first hot press processing. However, it is preferable that the upper limit of the difference in temperatures is up to 70°C.

The method for obtaining the semi-molten state of the middle layer region of the nonwoven fabric for semipermeable membrane supporting body of the present exemplary embodiment is not intended to be limited to the following method, but one example may be a method of utilizing the relationship between the fusion temperature and the line speed during the process of thermal fusion of organic synthetic fibers in the production of a supporting body (nonwoven fabric). If the line speed is relatively slow, heat is conducted to the interior in the thickness direction of the nonwoven fabric, and the coated layer region, the middle layer region and the non-coated layer region are thermally fused uniformly. The coated layer region refers to a region of the semipermeable membrane-coated side of a surface that is optionally selected from the both surfaces of the nonwoven fabric, and the non-coated layer region is an opposite region thereof. The surface on which a semipermeable membrane is to be coated is one surface of the nonwoven fabric. If the line has a speed exceeding a certain constant speed, heat cannot be easily conducted to the interior of the nonwoven fabric, thermal fusion in the middle layer region does not proceed, and the middle layer region is brought to a semi-molten state. However, if the line speed is further increased, thermal melting in the middle layer region does not proceed further, and the middle layer region is almost in an unfused state. As a result, the coating liquid penetrates excessively into the nonwoven fabric and deteriorates the formation of a semipermeable membrane, and there rises a problem that the nonwoven fabric itself is detached in the middle layer region. In regard to the semi-molten state of the middle layer region, strict process management should be carried out. Examples of the thermal fusion process include the drying zone of the papermaking process described previously, and hot press processing, and particularly, the general conditions of the hot press processing are important for their significant effects.

In order to put the delamination portion of the middle layer region of the nonwoven fabric for semipermeable membrane supporting body of the present exemplary embodiment into the scope of the present invention, it is necessary to homogeneously conduct the hot press processing while considering the heat balance from the side of the coated layer region and from the side of the non-coated layer region of the nonwoven fabric for semipermeable membrane supporting body. When a large heat quantity is provided to the side of the coated layer region, the thermal fusion bonding of this region proceeds, and the middle layer region in a semi-molten state deflects toward the side of the non-coated layer region. Conversely, when a large heat quantity is provided to the side of the non-coated layer region, the middle layer region deflects toward the side of the coated layer region. Especially in the case of a thermal calendar apparatus, the control of the temperature of the roll that contacts with the coated layer region side and non-coated layer region side of the nonwoven fabric is important.

However, since a wet laid nonwoven fabric before being subjected to hot press processing has undergone a non-homogeneous heat processing in a drying step in many cases, even a homogeneous heat processing is conducted in the hot press processing, the delamination portion is not necessarily put into the scope of the present invention.

For example, as a method for drying a wet laid nonwoven fabric before the hot press processing, a yankee dryer is frequently used, but in this case, the middle layer region in a semi-molten state easily deflects after the hot press processing, and thus controlling is especially important. Since the yankee dryer dries the sheet subjected to papermaking by providing heat to the sheet from only one side, the thermal melting of the organic synthetic fibers on the side of the yankee dryer-contacting surface of the sheet proceeds more. As a result thereof, in conducting hot press processing by using two rolls of a metal roll nip calendar, even if the roll temperatures are the same, the middle layer region in a semi-molten state deflects more easily toward the side of the surface opposite to the yankee dryer-contacting surface. In this case, it is preferable to decrease the roll temperature of the yankee dryer-contacting surface of the sheet and increase the roll temperature of the opposite surface. The difference in temperatures of the top roll and bottom roll depends on the line speed of the processing machine, but is preferably 5°C or more, more preferably 10°C or more. In the case when the line speed is 30 m/min or more, the difference in temperatures is preferably more than 10°C. If the difference in temperatures is too high, careful attention is required since the middle layer region easily deflects in an opposite manner.

As another example, in the case when a multicylinder dryer is used in the drying method, the drying is conducted by alternately contacting to the both surfaces of the wet laid nonwoven fabric, and thus the deflection of the middle layer region is relatively difficult to arise, but the thermal melting of the organic synthetic fibers arises after the wet paper of the wet nonwoven fabric formed by papermaking is completely dried, and thus it is not always true that the both surfaces of the nonwoven fabric are homogeneously thermal-melted. The middle layer region in a semi-molten state tends to deflect toward the side of the surface contacting with the cylinder dryer after complete drying. Also in this case, it is preferable to provide a difference in temperatures between the top roll and bottom roll as in the case of the yankee dryer. The difference in temperatures between the top roll and bottom roll is preferably 5°C or more, more preferably 10°C or more. In the case when the line speed is 30 m/min or more, the difference in temperatures is preferably higher than 10°C.

In the case when a soft nip calendar of a metal roll/a resin roll is used as the hot press processing, a first hot press processing is conducted, and a processing is then conducted as a second hot press processing on the surface opposite to the surface with which the metal roll has been brought into contact in the first processing. Also in this case, the delamination portion can be put into the scope of the present invention by increasing the temperature of the metal roll on the side of the opposite surface to which the middle layer region has deflected. In this case, either of the first and second roll temperatures can be increased. Furthermore, in the case when the first processing is conducted by a metal roll nip calendar, and the second processing is conducted by combination of a metal roll/resin roll soft nip calendar, it is possible to bring the metal roll into contact with the side of the opposite surface to which the middle layer region has deflected, by the second soft nip calendar, to thereby put the delamination portion into the scope of the present invention, by presetting the first difference in temperatures to be small, for example, within 10°C, preferably within 5°C.

In the present exemplary embodiment, when the nonwoven fabric on which a semipermeable membrane is to be coated is separated into a layer on the side of the semipermeable membrane-coated surface and a layer on the side of the non-semipermeable membrane-coated surface by delaminating the nonwoven fabric into two layers in the thickness direction, the layer on the side of the semipermeable membrane-coated surface is 35% by mass or more and 70% by mass or less with respect to the total of the layer on the side of the semipermeable membrane-coated surface and the layer on the side of the non-semipermeable membrane-coated surface, i.e., the mass ratio of the layer on the side of the semipermeable membrane-coated surface to the layer on the side of the non-semipermeable membrane-coated surface is adjusted to be within the range from 35 : 65 to 70 : 30. More preferably, the mass ratio is within the range from 40 : 60 to 60 : 40. If the ratio of the layer on the side of the semipermeable membrane-coated surface in the mass ratio is less than 35, the middle layer region in a semi-molten state deflects toward the side of the coated layer region, and thus the semipermeable membrane coating liquid shallowly permeates into the nonwoven fabric layer when the coating liquid is coated on the nonwoven fabric, and the shrinkage of the semipermeable membrane on the surface layer of the coated surface and the shrinkage of the semipermeable membrane in the nonwoven fabric layer during the curing of the coating liquid arise at the side closer to the coated layer region, and thus curl arises. Furthermore, if the ratio of the layer on the side of the semipermeable membrane-coated surface in the mass ratio is more than 70, the middle layer region in a semi-molten state deflects toward the side of the non-coated layer region, and thus the permeation-through of the semipermeable membrane coating liquid toward the side of the non-coated surface of the nonwoven fabric sheet easily arises. Here, the relationship between the coated layer region, middle layer region and non-coated layer region, and the layer on the side of the semipermeable membrane-coated surface and the layer on the side of the non-semipermeable membrane-coated surface will be explained. The coated layer region, middle layer region and non-coated layer region refer to the respective areas divided into three areas along the thickness direction of the nonwoven fabric. The layer on the side of the semipermeable membrane-coated side surface layer and the layer on the side of the non-semipermeable membrane-coated surface are respective layers when the nonwoven fabric is separated into two layers by delaminating the nonwoven fabric in the thickness direction. Furthermore, since delaminating arises mainly at the middle layer region, the layer on the side of the semipermeable membrane-coated surface includes the coated layer region and a part of the middle layer region, and the layer on the side of the non-semipermeable membrane-coated surface includes the non-coated layer region and the remainder part of the middle layer region.

In the present exemplary embodiment, the nonwoven fabric is separated into the layer on the side of the semipermeable membrane-coated surface and the layer on the side of non-semipermeable membrane-coated surface by delaminating the nonwoven fabric into two layers, and the respective mass ratios are obtained. An example of the method for delaminating the nonwoven fabric as used herein include a method in which the internal bond strength based on JAPAN TAPPI Methods for Testing Paper and Pulp No. 18-2: 2000, "Paper and Board Paper Methods for Testing Internal Bond Strength - Part 2: Internal Bond Tester Method" of the sample is measured, the sample is then delaminated into two layers, the weights of the delaminated samples are respectively measured, and the mass ratio is obtained.

The semi-molten state of the fiber in the middle layer region can be represented by, for example, the internal bond strength in the transverse direction of the above-mentioned sheet. The internal bond strength as used herein is a numerical value measured by an internal bond tester for evaluating internal bond strength based on the above-mentioned JAPAN TAPPI Methods for Testing Paper and Pulp No. 18-2: 2000, "Paper and Board Paper Methods for Testing Internal Bond Strength - Part 2: Internal Bond Tester Method". The numerical value is obtained by a test method in which a test piece with adhesive tapes attached to the both surfaces thereon is attached to a sample attaching plate, an L-shaped bracket is attached to the test piece and then an impact is provided onto the test piece by a hammer, and the load at the time when the test piece peels off together with the L-shaped bracket is measured. The unit is N□m. Since the internal bond strength is obtained by measuring the strength of delaminating from the part where the strength is weak in the nonwoven fabric layer, it can be an index for showing whether the thermal fusion bonding state of the fibers in the middle layer region of the nonwoven fabric is high or low. The reason why the internal bond strength is in the sheet transverse direction is that the fiber alignment of a nonwoven fabric generally easily becomes the longitudinal
direction, and thus the internal bond strength in the sheet transverse direction tends to be lower than that in the sheet longitudinal direction, and the difference in thermal fusion bonding states of the fibers easily appears.

In the present invention, the internal bond strength in the sheet transverse direction is preferably in the range from 0.4 to 0.8 N·m, more preferably in the range from 0.5 to 0.75 N·m. When the internal bond strength is greater than 0.8 N·m, the thermal melting property of the fibers in the middle layer region of the nonwoven fabric increases and the middle layer region becomes dense, and thus the semipermeable membrane coating liquid becomes difficult to permeate into the middle layer region and curl is likely to arise. When the internal bond strength is less than 0.4 N·m, the thermal melting property of the fibers in the middle layer region of the nonwoven fabric becomes low and the middle layer region becomes rough, and thus the semipermeable membrane coating liquid extremely permeates the middle layer region, and the surface property (thickness homogeneity) of the semipermeable membrane is deteriorated, and resin permeation-through arises.

The Bekk smoothness is a test method according to JIS P 8119 : 1998, "Paper and Board Paper - Method for Testing Smoothness by Bekk Smoothness Tester", and can be measured by using a Bekk smoothness tester. In the present invention, the Bekk smoothnesses of the surface for coating a semipermeable membrane and the non-coated surface are preferably 5 seconds or more, further preferably 10 seconds or more. When the Bekk smoothnesses are lower than 5 seconds, the thermal fusion bonding property of the organic synthetic fibers in the surface for coating a semipermeable membrane and non-coated surface is deteriorated, and the compactness of the surfaces is lowered. Accordingly, when the smoothness of the surface for coating a semipermeable membrane is lower than 5 seconds, the fiber melting state of the surface for coating a semipermeable membrane is poor, and the fluff of the fibers penetrates a semipermeable membrane, and thus the surface property of the semipermeable membrane is deteriorated. Furthermore, when the smoothness of the non-coated surface is lower than 5 seconds, the semipermeable membrane coating liquid that has penetrated into the middle layer region excessively penetrates into the non-coated layer region, and thus resin permeation-through arises, and the surface property (thickness homogeneity) of the semipermeable membrane is deteriorated.

When the Bekk smoothness of the surface for coating a semipermeable membrane is high, the semipermeable membrane coating liquid can be coated more homogeneously, and the unevenness of the thickness of the semipermeable membrane is decreased and thus the surface property of the semipermeable membrane is improved. However, when the Bekk smoothness is too high, the clinging of the semipermeable membrane to the surface of the nonwoven fabric is deteriorated, and an anchor effect is difficult to appear, and consequently, the semipermeable membrane and the nonwoven fabric are likely to be delaminated. At a lower Bekk smoothness, the clinging of the semipermeable membrane to the surface of the nonwoven fabric becomes finer and an anchor effect is likely to be exerted. Namely, the relationship between the Bekk smoothness of the surface for coating a semipermeable membrane and the delaminating strength is in a conflicting relationship.

However, since the middle layer region is in a semi-molten state in the nonwoven fabric of the present invention, the coating liquid permeates into the middle layer region even if the Bekk smoothness of the surface for coating a semipermeable membrane becomes relatively high; therefore, an anchor effect is exerted, and thus the semipermeable membrane and nonwoven fabric become difficult to be delaminated, and the surface property of the semipermeable membrane is also improved at the same time. However, if the internal bond strength of the nonwoven fabric in the sheet transverse direction is too high, the semipermeable membrane coating liquid is difficult to permeate into the middle layer region in the case when the Bekk smoothness is high, and thus an anchor effect is difficult to appear, and the semipermeable membrane and the nonwoven fabric are likely to be delaminated. Conversely, if the internal bond strength of the nonwoven fabric in the sheet transverse direction is too low, whereas if the Bekk smoothness is high, the semipermeable membrane coating liquid excessively permeates into the middle layer region, and thus the surface property of the semipermeable membrane is deteriorated. The upper limit of the Bekk smoothness is not limited, but it is preferably 50 seconds or less, further preferably 40 seconds or less.

In order to improve the coating adequacy of the semipermeable membrane coating liquid onto the nonwoven fabric, it is also necessary to control the aeration property of the nonwoven fabric after the hot press processing. In this exemplary embodiment, the aeration property is represented by a pressure drop. The unit is Pa. The pressure drop is preferably from 50 Pa to 3000 Pa, and more preferably from 80 Pa to 1500 Pa, as the pressure drop obtainable when the face velocity of the wet laid nonwoven fabric is 5.3 cm/second. If the pressure drop is less than 50 Pa, the semipermeable membrane coating liquid excessively penetrates to the nonwoven fabric, and the surface of the semipermeable membrane becomes uneven, or permeation-through arises. Furthermore, if the pressure drop is larger than 3000 Pa, to the contrary, since the semipermeable membrane coating liquid becomes difficult to penetrate into the sheet interior of the wet laid nonwoven fabric, the clinging of the semipermeable membrane to the wet laid nonwoven fabric surface is deteriorated.

In order to make the coating suitability of the semipermeable membrane coating liquid to the nonwoven fabric more satisfactory, it is also necessary to increase the sheet density of the nonwoven fabric that serves as a base material. The sheet density is preferably 0.5 g/cm³ or more, more preferably 0.6 g/cm³ or more, and most preferably 0.7 g/cm³ or more. If the sheet density is less than 0.5 g/cm³, the semipermeable membrane coating liquid penetrates excessively to the nonwoven fabric, and the surface of the semipermeable membrane may become nonuniform, or permeation-through may occur. The upper limit of the sheet density is, for example, 1.0 g/cm³.

The basis weight of the nonwoven fabric is preferably 30 g/m² to 200 g/m², and more preferably 50 g/m² to 150 g/m². If the basis weight of the nonwoven fabric is larger than 200 g/m², when the semipermeable membrane thus produced is formed into a module, the module may become excessively thick so that the area per module is decreased, and the filtration performance may decrease. If the basis weight is less than 30 g/m², the thickness is excessively small so that there is a risk of the occurrence of permeation-through of the semipermeable membrane coating liquid in the film-forming process. Furthermore, the thickness of the nonwoven fabric is preferably 30 µm to 400 µm, and more preferably 55 µm to 300 µm. If the thickness of the nonwoven fabric is more than 400 µm, when the semipermeable membrane thus produced is formed into a module, the module may become excessively thick so that the area per module is decreased, and the filtration performance may decrease. If the thickness is less than 30 µm, the thickness is excessively small so that there is a risk of the occurrence of permeation-through of the semipermeable membrane coating liquid in the film-forming process.

### [Examples]

Next, the present invention will be described more specifically by way of Examples, but the present invention is not intended to be limited to these Examples.

### (Example 1)

### <Preparation of fiber raw material slurry>

22 kg of a commercially available polyester main constituent fiber (trade name: EP133, manufactured by Kuraray Co., Ltd.) having a fiber thickness of 1.45 decitex and a cut length of 5 mm, and 8 kg of a commercially available polyester binder fiber (trade name: TR07N, manufactured by Teijin Fibers, Ltd.) having a fiber thickness of 1.2 decitex and a cut length of 5 mm were introduced into water and were dispersed for 5 minutes using a dispersing machine, to obtain a fiber raw material slurry having a fiber content concentration of 1% by mass.

### <Preparation of fiber slurry>

Water was added to the fiber raw material slurry 1 to dilute the whole system, and thus a fiber slurry having a fiber content concentration of 0.03% by mass was obtained.

### <Production of sheet>

This fiber slurry was introduced into a head box of a short wire papermaking machine to process the fiber slurry for papermaking, and then the fiber slurry was dried with a yankee dryer having a surface temperature of 120°C, to obtain a continuous rolled base paper.

### <Hot press processing>

The rolled base paper was subjected to hot press processing under the conditions of roll surface temperatures of top roll/bottom roll of 190°C/180°C, a clearance between rolls of 70 µm, a linear pressure of 100 kN/m, and a line speed of 17 m/min, using a thermal calendar apparatus with a hard nip of metal roll/metal roll, having a surface length of the metal rolls of 1170 mm and a roll diameter of 450 mm in such a manner that the yankee dryer-contacting surface of the base paper was brought into contact with the bottom roll, and thus a nonwoven fabric for semipermeable membrane supporting body was obtained.

### (Example 2)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 192°C/178°C, and the yankee dryer-contacting surface of the base paper was brought into contact with the bottom roll, and thus a nonwoven fabric for semipermeable membrane supporting body was obtained.

### (Example 3)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 195°C/175°C, and the yankee dryer-contacting surface of the base paper was brought into contact with the bottom roll, and thus a nonwoven fabric for semipermeable membrane supporting body was obtained.

### (Example 4)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 200°C/170°C, and the yankee dryer-contacting surface of the base paper was brought into contact with the bottom roll, and thus a nonwoven fabric for semipermeable membrane supporting body was obtained.

### (Example 5)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 195°C/175°C, the line speed was changed to 20 m/min, and the yankee dryer-contacting surface of the base paper was brought into contact with the bottom roll, and thus a nonwoven fabric for semipermeable membrane supporting body was obtained.

### (Example 6)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 195°C/185°C, the line speed was changed to 12 m/min, and the yankee dryer-contacting surface of the base paper was brought into contact with the bottom roll, and thus a nonwoven fabric for semipermeable membrane supporting body was obtained.

### (Example 7)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 190°C/180°C, the line speed was changed to 8 m/min, and the yankee dryer-contacting surface of the base paper was brought into contact with the bottom roll, and thus a nonwoven fabric for semipermeable membrane supporting body was obtained.

### (Example 8)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The rolled base paper was subjected to hot press processing under the conditions of roll surface temperatures of top roll/bottom roll of 190°C/180°C, a clearance between rolls of 70 µm, a linear pressure of 100 kN/m, and a line speed of 30 m/min, using a thermal calendar apparatus with a hard nip of metal roll/metal roll, having a surface length of the metal rolls of 1170 mm and a roll diameter of 450 mm, in such a manner that the yankee dryer-contacting surface of the base paper was brought into contact with the bottom roll. The rolled roll is then subjected to hot press processing under the conditions of a roll surface temperature of 195°C, a clearance between rolls of 0 µm, a linear pressure of 150 kN/m, and a processing speed of 15 m/min, using a thermal calendar apparatus with a soft nip of metal roll/cotton roll, having a surface length of 1170 mm and a roll diameter of 450 mm of the metal roll and a surface length of 1170 mm and a roll diameter of 400 mm of the cotton roll, in such a manner that the yankee dryer-contacting surface of the base paper was brought into contact with the cotton roll, and thus a nonwoven fabric for semipermeable membrane supporting body was obtained.

### (Example 9)

### <Preparation of fiber raw material slurry>

The process was carried out in the same manner as in Example 1.

### <Preparation of fiber slurry>

The process was carried out in the same manner as in Example 1.

### <Production of sheet>

A continuous rolled base paper was obtained in a similar manner to Example 1, except that the drying used in Example 1 was conducted by such a drying method that the paper sheet was passed through four multicylinder dryers having a surface temperature of 110°C. The drying was conducted in such a manner that the surface of the paper sheet was brought into contact with the surfaces of the first and third cylinder dryers and the rear surface was brought into contact with the surfaces of the second and fourth cylinder dryers in an alternate manner. However, since the paper sheet was completely dried after the third cylinder dryer, and the thermal melting of the fibers arose on the fourth cylinder dryer, the thermal melting of the organic synthetic fibers proceeded more on the side of the sheet rear surface.

### <Hot press processing>

The process was carried out in the same manner as in Example 1, except that the rolled base paper used in Example 1 was subjected to hot press processing in such a manner that the roll surface temperatures of the top roll/bottom roll: 195°C/175°C, and the rear surface (the fourth cylinder dryer-contacting surface) of the base paper was brought into contact with the bottom roll, and thus a nonwoven fabric for semipermeable membrane supporting body was obtained.

### (Example 10)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 190°C/180°C, the linear pressure was changed to 150 kN/m, and the yankee dryer-contacting surface of the base paper was brought into contact with the bottom roll, and thus a nonwoven fabric for semipermeable membrane supporting body was obtained.

### (Example 11)

### <Preparation of fiber raw material slurry>

15 kg of a commercially available polyester main constituent fiber (trade name: EP133, manufactured by Kuraray Co., Ltd.) having a fiber thickness of 1.45 decitex and a cut length of 5 mm, 7 kg of a commercially available polyester main constituent fiber (trade name: TM04PN, manufactured by Teijin, Ltd.) having a fiber thickness of 0.1 decitex and a cut length of 5 mm, and 8 kg of a commercially available polyester binder fiber (trade name: TR07N, manufactured by Teijin Fibers, Ltd.) having a fiber thickness of 1.2 decitex and a cut length of 5 mm were introduced into water and dispersed for 5 minutes using a dispersing machine, to obtain a fiber raw material slurry having a fiber content concentration of 1% by mass.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 190°C/180°C, the line speed was changed to 18 m/min, and the yankee dryer-contacting surface of the base paper was brought into contact with the bottom roll, and thus a nonwoven fabric for semipermeable membrane supporting body was obtained.

### (Example 12)

### <Preparation of fiber raw material slurry>

15 kg of a commercially available polyester main constituent fiber (trade name: EP133, manufactured by Kuraray Co., Ltd.) having a fiber thickness of 1.45 decitex and a cut length of 5 mm, 7 kg of a commercially available polyester main constituent fiber (trade name: EP303, manufactured by Kuraray Co., Ltd.) having a fiber thickness of 3.1 decitex and a cut length of 5 mm, and 8 kg of a commercially available polyester binder fiber (trade name: TR07N, manufactured by Teijin Fibers, Ltd.) having a fiber thickness of 1.2 decitex and a cut length of 5 mm were introduced into water and were dispersed for 5 minutes using a dispersing machine, to obtain a fiber raw material slurry having a fiber content concentration of 1% by mass.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 190°C/180°C, the line speed was changed to 18 m/min, and the yankee dryer-contacting surface of the base paper was brought into contact with the bottom roll, and thus a nonwoven fabric for semipermeable membrane supporting body was obtained.

### (Example 13)

### <Preparation of fiber raw material slurry>

The process was carried out in the same manner as in Example 1.

### <Preparation of fiber slurry>

The process was carried out in the same manner as in Example 1.

### <Production of sheet>

A continuous rolled base paper was obtained in a similar manner to Example 1, except that the drying used in Example 1 was conducted by such a drying method that the paper sheet was passed through four multicylinder dryers having a surface temperature of 113°C. The drying was conducted in such a manner that the surface of the paper sheet was brought into contact with the surfaces of the first and third cylinder dryers and the rear surface was brought into contact with the surfaces of the second and fourth cylinder dryers in an alternate manner. Since the paper sheet was completely dried after the second cylinder dryer, and the thermal melting of the fibers arose on the third and fourth cylinder dryers, the thermal melting of the organic synthetic fibers proceeded homogeneously on the top and rear surfaces of the sheet.

### <Hot press processing>

The process was carried out in the same manner as in Example 1, except that the rolled base paper used in Example 1 was subjected to hot press processing in such a manner that the roll surface temperatures of the top roll/bottom roll: 185°C/185°C, and the top surface (the third cylinder dryer-contacting surface) of the base paper was brought into contact with the top roll and the rear surface (the fourth cylinder dryer-contacting surface) of the base paper was brought into contact with the bottom roll, and thus a nonwoven fabric for semipermeable membrane supporting body was obtained.

### (Example 14)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 180°C/190°C, and the yankee dryer-contacting surface of the base paper was brought into contact with the top roll, and thus a nonwoven fabric for semipermeable membrane supporting body was obtained.

### (Example 15)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The rolled base paper was subjected to hot press processing under the conditions of roll surface temperatures of top roll/bottom roll of 190°C/190°C, a clearance between rolls of 70 µm, a linear pressure of 100 kN/m, and a line speed of 40 m/min, using a thermal calendar apparatus with a hard nip of metal roll/metal roll, wherein each metal roll had a surface length of 1170 mm and a roll diameter of 450 mm, in such a manner that the yankee dryer-contacting surface of the base paper was brought into contact with the bottom roll. The rolled roll is then subjected to hot press processing under the conditions of a roll surface temperature of 200°C, a clearance between rolls of 0 µm, a linear pressure of 150 kN/m, and a processing speed of 17 m/min, using a thermal calendar apparatus with a soft nip of metal roll/cotton roll, wherein the metal roll had a surface length of 1170 mm and a roll diameter of 450 mm and the cotton roll had a surface length of 1170 mm and a roll diameter of 400 mm, in such a manner that the yankee dryer-contacting surface of the base paper was brought into contact with the cotton roll, and thus a nonwoven fabric for semipermeable membrane supporting body was obtained.

### (Comparative Example 1)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 185°C/185°C, and the yankee dryer-contacting surface of the base paper was brought into contact with the bottom roll, and thus a nonwoven fabric for semipermeable membrane supporting body was obtained.

### (Comparative Example 2)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 205°C/165°C, and the yankee dryer-contacting surface of the base paper was brought into contact with the bottom roll, and thus a nonwoven fabric for semipermeable membrane supporting body was obtained.

### (Comparative Example 3)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 190°C/180°C, the line speed was changed to 30 m/min, and the yankee dryer-contacting surface of the base paper was brought into contact with the bottom roll, and thus a nonwoven fabric for semipermeable membrane supporting body was obtained.

### (Comparative Example 4)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 9.

### <Hot press processing>

The process was carried out in the same manner as in Example 1, except that the rolled base paper used in Example 1 was subjected to hot press processing in such a manner that the roll surface temperatures of the top roll/bottom roll: 185°C/185°C, and the rear surface (the fourth cylinder dryer-contacting surface) of the base paper was brought into contact with the bottom roll, and thus a nonwoven fabric for semipermeable membrane supporting body was obtained.

### (Comparative Example 5)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in
Example 1 was subjected to hot press processing in such a manner that the roll surface temperatures of the top roll/bottom roll: 185°C/185°C, the linear pressure was changed to 150 kN/m, and the yankee dryer-contacting surface of the base paper was brought into contact with the bottom roll, and thus a nonwoven fabric for semipermeable membrane supporting body was obtained.

### (Comparative Example 6)

### <Preparation of fiber raw material slurry>

The process was carried out in the same manner as in Example 11.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 in was subjected to hot press processing in such a manner that the roll surface temperatures of the top roll/bottom roll: 185°C/185°C, the line speed was changed to 18 m/min, and the yankee dryer-contacting surface of the base paper was brought into contact with the bottom roll, and thus a nonwoven fabric for semipermeable membrane supporting body was obtained.

### (Comparative Example 7)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the rolled base paper used in Example 1 was subjected to hot press processing in such a manner that the roll surface temperatures of the top roll/bottom roll: 180°C/190°C, and the yankee dryer-contacting surface of the base paper was brought into contact with the bottom roll, and thus a nonwoven fabric for semipermeable membrane supporting body was obtained.

### (Comparative Example 8)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 8. Since the paper sheet was completely dried after the second cylinder dryer, and the thermal melting of the fibers arose on the third and fourth cylinder dryers, the thermal melting of the organic synthetic fibers proceeded homogeneously on the top and rear surfaces of the sheet.

### <Hot press processing>

The process was carried out in the same manner as in Example 1, except that the rolled base paper used in Example 1 was subjected to hot press processing in such a manner that the roll surface temperatures of the top roll/bottom roll: 180°C/190°C, and the top surface (the third cylinder dryer-contacting surface) of the base paper was brought into contact with the top roll and the rear surface (the fourth cylinder dryer-contacting surface) of the base paper was brought into contact with the bottom roll, and thus a nonwoven fabric for semipermeable membrane supporting body was obtained.

The nonwoven fabrics for semipermeable membrane supporting body obtained in the Examples were evaluated by the following methods.

### <Measurement of basis weight>

The measurement was carried out according to JIS P 8124:1998 "Paper and board - Determination of grammage." The unit was g/m².

### <Measurement of thickness and density>

The measurement was carried out according to JIS P 8118:1998 "Paper and Board Paper - Method for testing thickness and density". The unit was µm.

### <Measurement of pressure drop>

The pressure drop obtainable when air was blown to a filtering medium having an effective area of 100 cm² at a face velocity of 5.3 cm/sec using a home-made apparatus, was measured using a fine pressure difference meter (Manostar Gage manufactured by Yamamoto Electric Works Co., Ltd.). The unit was Pa.

### <Measurement of internal bond strength in sheet transverse direction>

Using an internal bond tester manufactured by Kumagai Riki Kogyo Co., Ltd., the internal bond strength in the sheet transverse direction was measured according to JAPAN TAPPI, Methods for Testing Paper and Pulp No. 18-2 : 2000 "Paper and Board Paper - Method for Testing Internal Bond Strength - Part 2: Internal Bond Tester Method". The size of the sample was 25.4 × 25.4 mm, and an average value of five points was obtained. The unit was N·m. The case when the value satisfied from 0.4 to 0.8 N·m was regarded as acceptable.

### <Formation of semipermeable membrane-coated layer>

A sample having an A4 size was cut out from each of the nonwoven fabrics for semipermeable membrane supporting body obtained in Examples, and a 15% by mass solution of a polysulfone resin in DMF (dimethylformamide) was coated onto the semipermeable membrane supporting body by using a gap applicator. The film thickness after the drying was 50 µm. The coated layer was solidified by immersing in water for 10 seconds immediately after the coating. This was subsequently immersed in warm water of 80°C for 2 minutes, and then dried in a dryer at 40°C to form a semipermeable membrane. The surface on which the semipermeable membrane was coated was the surface that had been brought into contact with the top roll by the hot press processing.

### <Resin permeation-through>

For the above-described samples of the nonwoven fabrics for supporting body on which semipermeable membrane-coated layers were formed, the state of permeation-through of the semipermeable membrane coating liquid in the non-coated surface was evaluated by visual inspection. A sample in which permeation-through was seen at the non-coated surface was rated as × (having a problem for practical use); a sample in which signs of permeation-through were seen was rated as Δ (level below the lower limit of practical usability); and a sample without any permeation-through was rated as ○ (no problem for practical use). Samples rated as ○ and Δ were regarded as acceptable, and samples rated as × were regarded as unacceptable.

### <Delamination position of sheet>

For the sample that had undergone the above-mentioned measurement of the internal bond strength in the sheet transverse direction and has been delaminated, the weight of the layer on the side of the coated surface and the weight of the non-coated surface layer were respectively measured, and the mass ratio of the layer on the side of the coated surface : non-coated surface layer was obtained (the total was 100).

### <MD curl after coating>

A sample having a size of 25 mm in the flow longitudinal axis direction (MD) and 38 mm in the horizontal axis direction (CD) was taken from the above-mentioned coated paper. For this sample, the distance between the both ends in the horizontal axis direction was measured and subtracted from the original length (38 mm), and thus MD curl was obtained. A larger numerical value indicates larger curl. The case when the MD curl was 4.0 mm or less was regarded as acceptable, and the case when the MD curl exceeded 4.0 mm was regarded as unacceptable.

### <Measurement of Bekk smoothness>

Using a Bekk smoothness tester manufactured by Kumagai Riki Kogyo Co., Ltd., the Bekk smoothnesses of the surface for coating a semipermeable membrane and non-coated surface of the sample were measured according to JIS P 8119 : 1998 "Paper and Board Paper - Method for Testing Smoothness by Bekk Smoothness Tester".

**[Table 1]**

| | | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|---|
| Fiber blend | | | PET main constituent 1.45dtex,5mm 22kg/ PET binder 1.2dtex,5mm 8kg | PET main constituent 1.45dtex,5mm 22kg/ PET binder 1.2dtex,5mm 8kg | PET main constituent 1.45dtex,5mm 22kg/ PET binder 1.2dtex.5mm 8kg | PET main constituent 1.45dtex,5mm 22kg/ PET binder 1.2dtex,5mm 8kg | PET main constituent 1.45dtex,5mm 22kg/ PET binder 1.2dtex,5mm 8kg | PET main constituent 1.45dtex,5mm 22kg/ PET binder 8kg | PET main constituent 1.45dtex,5mm 22kg/ PET binder 1.2dtex,5mm 8kg | PET main constituent 1.45dtex.5mm 22kg/ PET binder 1.2dtex,5mm 8kg | PET main constituent 1.45dtex,5mm 22kg/ PET binder 1.2dtex,5mm 8kg | PET main constituent 1.45dtex,5mm 22kg/ PET binder 1.2dtex,5mm 8kg | PET main constituent 1.45dtex.5mm 15kg/ PET main constituent 0.1dtex,5mm 7kg/ PET binder 1.2dtex,5mm 8kg | PET main constituent 1.45dtex,5mm 15kg/ PET main constituent 3.1dtex,5mm 7kg/ PET binder 8kg | PET main constituent 1.45dtex,5mm 22kg/ PET binder 1.2dtex,5mm 8kg | PET main constituent 1.45dtex,5mm 22kg/ PET binder 1.2dtex,5mm 8kg | PET main constituent 1.45dtex,5mm 22kg/ PET binder 1,2dtex,5mm 8kg |
| Format of drying sheet | | | Yankee120°C | Yankee120°C | Yankee120°C | Yankee120°C | Yankee120°C | Yankee120°C | Yankee120°C | Yankee120°C | Four multi-cylinders. 110°C | Yankee120°C | Yankee120°C | Yankee120°C | Four multi-cylinders. 110°C | Yankee120°C | Yankee120°C |
| Hot press processing | | Roll | Metal/metal | Metal/metal | Metal/metal | Metal/metal | Metal/metal | Metal/metal | Metal/metal | Metal/metal | Metal/metal | Metal/metal | Metal/metal | Metal/metal | Metal/metal | Metal/metal | Metal/metal |
| | | Temperature °C(top/bottom) | 190/180 | 192/178 | 195/175 | 200/170 | 195/175 | 195/185 | 190/180 | 190/180 | 195/175 | 190/180 | 190/180 | 190/180 | 188/183 | 180/190 | 190/190 |
| | | Clearance µm | 70 | 70 | 70 | 70 | 70 | 70 | 70 | 70 | 70 | 70 | 70 | 70 | 70 | 70 | 70 |
| | | Linear pressure kN/m | 100 | 100 | 100 | 100 | 100 | 100 | 100 | 100 | 100 | 150 | 100 | 100 | 100 | 100 | 100 |
| | | Line speed m/min | 17 | 17 | 17 | 17 | 20 | 12 | 8 | 30 | 17 | 17 | 18 | 18 | 17 | 17 | 40 |
| Hot press processing (secondary processing) | | | - | - | - | - | - | - | - | Metal/cotton | - | - | - | - | - | - | Metal/cotton |
| Grammage | | g/m² | 75 | 75 | 76 | 77 | 74 | 74 | 77 | 75 | 76 | 75 | 75 | 77 | 77 | 77 | 76 |
| Thickness | | *µ*m | 96 | 97 | 96 | 97 | 96 | 96 | 99 | 94 | 97 | 88 | 97 | 99 | 98 | 98 | 95 |
| Density | | g/cm³ | 0.781 | 0.773 | 0.792 | 0.794 | 0.771 | 0.771 | 0.778 | 0.798 | 0.784 | 0.852 | 0.773 | 0.778 | 0.786 | 0.786 | 0.800 |
| Pressure drop | | Pa | 440 | 440 | 450 | 400 | 430 | 420 | 460 | 460 | 380 | 710 | 540 | 220 | 400 | 440 | 440 |
| Internal bond strength in sheet transverse direction | | N·m | 0.67 | 0.64 | 0.63 | 0.66 | 0.51 | 0.76 | 0.92 | 0.60 | 0.65 | 0.71 | 0.64 | 0.59 | 0.62 | 0.64 | 0.53 |
| Resin permeation-through | | | ○ | ○ | ○ | ○ | ○ | ○ | ○ | ○ | ○ | ○ | ○ | ○ | ○ | ○ | ○ |
| Delamination position of sheet (Mass ratio of layer on side of coated surface : layer on side of non-coated surface) | | | 37:63 | 43:57 | 51:49 | 65:35 | 44:56 | 52:48 | 56:44 | 63:37 | 48:52 | 38:62 | 39:61 | 39:61 | 47:53 | 58:42 | 57:43 |
| MD curl after coating | | mm | 2.1 | 0.3 | 0.0 | 0.3 | 0.4 | 0.4 | 3.6 | 0.5 | 0.5 | 1.8 | 1.7 | 1.8 | 0.5 | 0.4 | 0.3 |
| Bekk smoothness | Coated surface | S | 13.4 | 14.3 | 14.4 | 15.1 | 19.5 | 25.4 | 40.2 | 8.0 | 15.1 | 41.8 | 22.0 | 16.3 | 15.1 | 13.6 | 10.6 |
| Same | Non-coated surface | S | 14.2 | 14.0 | 13.8 | 13.7 | 18.8 | 23.6 | 38.5 | 12.3 | 13.7 | 42.3 | 22.7 | 17.3 | 15.4 | 13.5 | 11.5 |

**[Table 2]**

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Fiber blend | | | PET main constituent 1.45dtex,5mm 22kg/ PET binder 1.2dtex,5mm 8kg | PET main constituent 1.45dtex.5mm 22kg/ PET binder 1.2dtex,5mm 8kg | PET main constituent 1.45dtex,5mm 22kg/ PET binder 1.2dtex,5mm 8kg | PET main constituent 1.45dtex,5mm 22kg/ PET binder 1.2dtex,5mm 8kg | PET main constituent 1.45dtex,5mm 22kg/ PET binder 1.2dtex,5mm 8kg | PET main constituent 1.45dtex,5mm 15kg/ PET main constituent 0.1dtex,5mm 7kg/ PET binder 1.2dtex,5mm 8kg | PET main constituent 1.45dtex,5mm 22kg/ PET binder 1.2dtex.5mm 8kg | PET main constituent 1.45dtex,5mm 22kg/ PET binder 1.2dtex,5mm 8kg |
| Format of drying sheet | | | Yankee120°C | Yankee120°C | Yankee120°C | Four multi-cylinders,110°C | Yankee120°C | Yankee120°C | Yankee120°C | Four multi-cylinders, 110°C |
| Hot press processing | | Roll | Metal/metal | Metal/metal | Metal/metal | Metal/metal | Metal/metal | Metal/metal | Metal/metal | Metal/metal |
| | | Temperature °C(top/bottom) | 185/185 | 205/165 | 190/180 | 185/185 | 185/185 | 185/185 | 180/190 | 195/175 |
| | | Clearance µm | 70 | 70 | 70 | 70 | 70 | 70 | 70 | 70 |
| | | Linear pressure kN/m | 100 | 100 | 100 | 100 | 150 | 100 | 100 | 100 |
| | | Line speed m/min | 17 | 17 | 30 | 17 | 17 | 18 | 17 | 17 |
| Hot press processing (secondary processing) | | | - | - | - | - | - | - | - | - |
| Grammage | | g/m² | 77 | 76 | 75 | 77 | 77 | 76 | 76 | 76 |
| Thickness | | *µ*m | 97 | 97 | 97 | 97 | 90 | 98 | 97 | 99 |
| Density | | g/cm³ | 0.794 | 0.784 | 0.773 | 0.794 | 0.856 | 0.776 | 0.784 | 0.768 |
| Pressure drop | | Pa | 410 | 450 | 370 | 390 | 680 | 550 | 410 | 410 |
| Internal bond strength in sheet transverse direction | | N·m | 0.64 | 0.66 | 0.30 | 0.61 | 0.68 | 0.68 | 0.62 | 0.60 |
| Resin permeation-through | | | ○ | × | × | ○ | ○ | ○ | ○ | × |
| Delamination position of sheet (Mass ratio of layer on side of coated surface : layer on side of non-coated | | | 24:76 | 76:24 | 25:75 | 21:79 | 23: 77 | 26:74 | 16:84 | 77:23 |
| MD curl after coating | | mm | 6.9 | 0.1 | 6.1 | 6.4 | 6.5 | 6.1 | 7.3 | 0.2 |
| Bekk smoothness | Coated surface | S | 12.5 | 17.6 | 3.9 | 13.4 | 40.7 | 24.5 | 14.1 | 17.8 |
| Same | Non-coated surface | S | 14.6 | 12.3 | 4.1 | 14.5 | 41.9 | 23.9 | 15.5 | 15.0 |

The results are shown in Table 1 and Table 2. In Examples 1 to 7, the rolled base paper that was dried from only one surface by the yankee dryer was used; however, the sheet delamination portion was within the scope of the present invention, and the MD curl after the coating was decreased to a level with no problem, by providing a difference in temperatures of the top/bottom by the hot press processing. However, in Example 7, since the line speed was slow, the thermal melting property of the fibers in the nonwoven fabric middle layer region was increased, the internal bond strength was increased, and the MD curl was slightly large.

On the other hand, in Comparative Example 1 having no difference in temperatures of the top/bottom, the sheet delamination portion was out of the scope of the present invention, and the MD curl was large. In Comparative Example 2, since an excessively great difference in temperatures of the top/bottom was provided, the sheet delamination portion excessively shifted to the side of the non-coated surface, and thus the permeation-through of the resin arose.

The effect of the difference in temperatures of the top/bottom in the hot press processing was also shown in Example 10 and Comparative Example 5 in which the linear pressure condition for the hot press processing was changed, and in Example 11, Example 12 and Comparative Example 6 in which plural primary fibers were mixed.

Example 14 is an example in which the difference in temperatures of the top/bottom in the hot press processing was reversed to thereby bring the yankee dryer-contacting surface into contact with the top roll. As in Example 1, the sheet delamination portion was within the scope of the present invention, and the MD curl after the coating was decreased to a level with no problem. However, in Comparative Example 7, since the yankee dryer-contacting surface was brought into contact with the bottom roll while keeping the difference in temperatures of the top/bottom reversed, the sheet delamination portion significantly deviated out of the scope of the present invention, and the MD curl after the coating was increased.

In Comparative Example 3, a difference in temperatures of the top/bottom was provided, but the line speed was too fast, and thus the thermal melting property of the entirety of the nonwoven fabric was deteriorated, and the sheet delamination portion excessively shifted to the side of the coated surface, and thus the MD curl became large. On the other hand, in Example 8 in which the hot press processing of the soft nip was further conducted in addition to the conditions of Comparative Example 3, the side of the coated surface was heated by the metal top roll, and as a result thereof, the thermal melting on the side of the coated surface proceeded, and the sheet delamination portion approached the center part of the middle layer region, and thus the MD curl became small. Furthermore, it was shown in Example 15 that the MD curl became small by only the effect of the soft nip processing of the secondary hot press without providing a difference in temperatures of the top/bottom in the primary hot press.

In Example 9 and Comparative Example 4, a yankee dryer was not used in the preparation of the rolled base paper, and the both surfaces of the sheet were alternately dried by multi-cylinder dryers, but consequently, the thermal melting of the fibers arose in the fourth cylinder dryer; therefore, these are examples in which the thermal melting of the rear surface of the sheet proceeded. As in Examples 1 to 7, in Example 9, the sheet delamination portion was put into the scope of the present invention, and the MD curl became small, by providing a difference in temperatures of the top/bottom in the hot press processing. On the other hand, in Comparative Example 4, since there was no difference in temperatures of the top/bottom, the sheet delamination portion shifted to the side of the coated surface, and the MD curl became large.

As in Example 9, in Example 13, a yankee dryer was not used in the preparation of the rolled base paper, and the both surfaces of the sheet were alternately dried by multi-cylinder dryers. As a result of the change in the surface temperature of the multi-cylinder dryers, the thermal melting of the fibers arose in both of the third and fourth cylinder dryers, and thus the thermal melting homogeneously proceeded on the top and rear surfaces of the sheet. The difference in temperatures of the top/bottom in the hot press processing was 5°C, the sheet delamination portion was within the scope of the present invention, and the MD curl after the coating was at a level with no problem. On the other hand, in Comparative Example 8, as a result of the increasing of the difference in temperatures of the top/bottom in this hot press processing of the rolled base paper, the sheet delamination portion was conversely out of the scope of the present invention, and the MD curl after the coating became large.

## Claims

1. A nonwoven fabric for semipermeable membrane supporting body, which is the nonwoven fabric containing organic synthetic fibers as a primary component, wherein a semipermeable membrane is to be supported by one surface of the nonwoven fabric, wherein
the organic synthetic fiber consists of a polyester fiber having a length of 1 to 8 mm, and
the nonwoven fabric is a wet laid nonwoven fabric subjected to hot press processing, having a density of 0.5 to 1.0 g/cm³, a grammage of 30 to 200 g/m², and a thickness of 30 to 400 µm, wherein
when the nonwoven fabric on which a semipermeable membrane is to be coated is sectioned in the thickness direction into a coated layer region on the side on which a semipermeable membrane is to be disposed, a middle layer region, and a non-coated layer region that is opposite to the surface on which a semipermeable membrane is to be disposed, the degree of thermal melting of the organic synthetic fibers in the middle layer region is lower than the degree of thermal melting of the organic synthetic fibers in the coated layer region and the non-coated layer region, wherein
when the nonwoven fabric on which the semipermeable membrane is to be coated is separated into a layer on the side of the semipermeable membrane-coated surface and a layer on the side of the non-semipermeable membrane-coated surface by delaminating the nonwoven fabric into two layers in the thickness direction, the layer on the side of the semipermeable membrane-coated surface is 35% by mass or more and 70% by mass or less with respect to the total of the layer on the side of the semipermeable membrane-coated surface and the layer on the side of the non-semipermeable membrane-coated surface, wherein
a method for delaminating the nonwoven fabric is a method in which the internal bond strength based on JAPAN TAPPI Methods for Testing Paper and Pulp No. 18-2: 2000, "Paper and Board Paper Methods for Testing Internal Bond Strength - Part 2: Internal Bond Tester Method" of the sample is measured, the sample is then delaminated into two layers, the weights of the delaminated samples are respectively measured, and the mass ratio is obtained, wherein
any one surface of the nonwoven fabric may serve as the semipermeable membrane, and wherein
the nonwoven fabric consists of polyester fibers.

2. The nonwoven fabric for semipermeable membrane supporting body according to claim 1, wherein the nonwoven fabric before being subjected to hot press processing has a single layer structure.

3. The nonwoven fabric for semipermeable membrane supporting body according to any one of claims 1 to 2, wherein the organic synthetic fibers include a main constituent fiber, and the main constituent fiber is one kind of polyester main constituent fiber.

4. A method for producing a nonwoven fabric for semipermeable membrane supporting body, which is the nonwoven fabric containing organic synthetic fibers as a primary component, wherein a semipermeable membrane is to be supported by one surface of the nonwoven fabric, including the steps of:
subjecting a fiber slurry containing the organic synthetic fibers to papermaking to give a wet paper wherein the organic synthetic fiber consists of a polyester fiber having a length of 1 to 8 mm,
drying the wet paper by a dryer to give a continuous rolled base paper, and
subjecting the base paper to hot press processing wherein the temperature conditions for the hot press processing is in the range of 160°C to 260°C, in which a difference in surface temperatures is preset between a top roll and a bottom roll of a thermal calendar apparatus, and the side of the surface of the wet paper that has received a more heat quantity from the dryer after the time when the wet paper has been put into a completely dried state in the drying of the wet paper by the dryer is brought into contact with the roll preset to a low temperature, to give the nonwoven fabric, wherein
the nonwoven fabric consists of polyester fibers, wherein
the relationship between the heat quantity provided to the surface of the base paper and the heat quantity provided to the rear surface when the hot press processing is conducted satisfies Condition 1, wherein
the non-woven fabric is a wet laid non-woven fabric having a density of 0.5 to 1.0 g/cm³, a grammage of 30 to 200 g/m², and a thickness of 30 to 400 µm, wherein
when the nonwoven fabric on which a semipermeable membrane is to be coated is sectioned in the thickness direction into a coated layer region on the side on which a semipermeable membrane is to be disposed, a middle layer region, and a non-coated layer region that is opposite to the surface on which a semipermeable membrane is to be disposed, the degree of thermal melting of the organic synthetic fibers in the middle layer region is lower than the degree of thermal melting of the organic synthetic fibers in the coated layer region and the non-coated layer region, and wherein
any surface of the non-woven fabric may be coated with the semipermeable membrane:
(Condition 1) when the nonwoven fabric is separated into a layer on the side of the semipermeable membrane-coated surface and a layer on the side of the non-semipermeable membrane-coated surface by delaminating the nonwoven fabric into two layers in the thickness direction, the layer on the side of the semipermeable membrane-coated surface is 35% by mass or more and 70% by mass or less with respect to the total of the layer on the side of the semipermeable membrane-coated surface and the layer on the side of the non-semipermeable membrane-coated surface wherein a method for delaminating the nonwoven fabric is a method in which the internal bond strength based on JAPAN TAPPI Methods for Testing Paper and Pulp No. 18-2: 2000, "Paper and Board Paper Methods for Testing Internal Bond Strength - Part 2: Internal Bond Tester Method" of the sample is measured, the sample is then delaminated into two layers, the weights of the delaminated samples are respectively measured, and the mass ratio is obtained.

## Patentansprüche

1. Vliesstoff für einen Trägerkörper für eine semipermeable Membran, wobei der Vliesstoff organische Synthesefasern als einen Hauptbestandteil aufweist, wobei eine semipermeable Membran durch eine Oberfläche des Vliesstoffs gehalten werden soll, wobei
die organischen Synthesefasern aus Polyesterfasern mit einer Länge von 1 bis 8 mm bestehen,
der Vliesstoff ein nassgelegter Vliesstoff ist, der einer Heißpressbearbeitung unterzogen wird und eine Dichte von 0,5 bis 1,0 g/cm³, ein Flächengewicht von 30 bis 200 g/mm² und eine Dicke von 30 bis 400 µm aufweist, wobei,
wenn der mit der semipermeablen Membran zu beschichtende Vliesstoff in der Dickenrichtung in einen beschichteten Schichtbereich auf der mit der semipermeablen Membran zu beschichtenden Seite, einen mittleren Schichtbereich und einen unbeschichteten Schichtbereich auf einer Seite geteilt wird, die der mit der semipermeablen Membran zu beschichtenden Seite gegenüberliegt, der thermische Verschmelzungsgrad der organischen Synthesefasern im mittleren Schichtbereich kleiner ist als der thermische Verschmelzungsgrad der organischen Synthesefasern im beschichteten Schichtbereich und im unbeschichteten Schichtbereich, wobei
wenn der mit der semipermeablen Membran zu beschichtende Vliesstoff durch Delaminieren des Vliesstoffs in zwei Schichten in der Dickenrichtung in eine Schicht auf der mit der semipermeablen Membran zu beschichtenden Seite und eine Schicht auf der nicht mit der semipermeable Membran zu beschichtenden Seite geteilt wird, die Schicht auf der mit der semipermeablen Membran zu beschichtenden Seite 35 Masse-% oder mehr und 70 Masse-% oder weniger bezüglich der Gesamtmasse der Schicht auf der mit der semipermeablen Membran zu beschichtenden Seite und der Schicht auf der nicht mit der semipermeablen Membran zu beschichtenden Seite beträgt, wobei
ein Verfahren zum Delaminieren des Vliesstoffs ein Verfahren ist, bei dem die innere Bindungsfestigkeit einer Probe basierend auf den JA-PAN-TAPPI-Verfahren zum Prüfen von Papier und Pulpe Nr. 18-2: 2000 "Paper and Board Paper - Method for Testing Internal Bond Strength, Teil 2: Internal Bond Tester Method" gemessen wird, wobei die Probe anschließend in zwei Schichten delaminiert wird, jeweils die Gewichte der delaminierten Proben gemessen werden und das Massenverhältnis bestimmt wird, wobei
eine beliebige Oberfläche des Vliesstoffs als die semipermeable Membran dienen kann, und wobei
der Vliesstoff aus Polyesterfasern besteht.

2. Vliesstoff nach Anspruch 1, wobei der Vliesstoff eine einschichtige Struktur hat, bevor er einer Heißpressbearbeitung unterzogen wird.

3. Vliesstoff nach Anspruch 1 oder 2, wobei die organischen Synthesefasern Hauptbestandteilfasern des Polyestertyps aufweisen.

4. Verfahren zum Herstellen eines Vliesstoffs für einen Trägerkörper für eine semipermeable Membran, wobei der Vliesstoff organische Synthesefasern als einen Hauptbestandteil aufweist, wobei eine semipermeable Membran durch eine Oberfläche des Vliesstoffs gehalten werden soll, wobei das Verfahren die Schritte aufweist;
Ausführen eines Papierherstellungsprozesses bezüglich eines Faserbreis, der organische Synthesefasern enthält, um nasses Papier zu erhalten, wobei die organischen Synthesefasern aus Polyesterfasern mit einer Länge von 1 bis 8 mm bestehen;
Trocknen des nassen Papiers durch einen Trockner, um ein kontinuierliches gerolltes Basispapier zu erhalten; und
Ausführen einer Heißpressbearbeitung bezüglich des Basispapiers, wobei die Temperaturbedingungen für die Heißpressbearbeitung in einem Bereich von 160°C bis 260°C liegen, wobei eine Differenz der Oberflächentemperaturen zwischen einer oberen Rolle und einer unteren Rolle einer thermischen Kalandervorrichtung voreingestellt ist, und wobei die Oberflächenseite des nassen Papiers, die nach der Zeitdauer, in der das nasse Papier durch Trocknen des nassen Papiers durch den Trockner auf einen vollständig getrockneten Zustand gebracht wird, eine größere Wärmemenge vom Trockner empfangen hat, mit der auf eine niedrige Temperatur voreingestellten Rolle in Kontakt gebracht wird, um den Vliesstoff zu erhalten, wobei
der Vliesstoff aus Polyesterfasern besteht, wobei
die Beziehung zwischen der der Oberflächenseite des Basispapiers zugeführten Wärmemenge und der der Rückseite zugeführten Wärmemenge während der Heißpressbearbeitung die Bedingung 1 erfüllt, wobei
der Vliesstoff ein nassgelegter Vliesstoff mit einer Dichte von 0,5 bis 1,0 g/cm³, einem Flächengewicht von 30 bis 200 g/mm² und einer Dicke von 30 bis 400 µm ist, wobei,
wenn der mit der semipermeablen Membran zu beschichtende Vliesstoff in der Dickenrichtung in einen beschichteten Schichtbereich auf der mit der semipermeablen Membran zu beschichtenden Seite, einen mittleren Schichtbereich und einen unbeschichteten Schichtbereich auf einer Seite geteilt wird, die der mit der semipermeable Membran zu beschichtenden Seite gegenüberliegt, der thermische Verschmelzungsgrad der organischen Synthesefasern im mittleren Schichtbereich kleiner ist als der thermische Verschmelzungsgrad der organischen Synthesefasern im beschichteten Schichtbereich und im unbeschichteten Schichtbereich, und wobei
eine beliebige Oberfläche des Vliesstoffs mit der semipermeablen Membran beschichtet werden kann:
(Bedingung 1) wenn der Vliesstoff durch Delaminieren des Vliesstoffs in zwei Schichten in der Dickenrichtung in eine Schicht auf der mit der semipermeablen Membran zu beschichtenden Seite und eine Schicht auf der nicht mit der semipermeablen Membran zu beschichtenden Seite geteilt wird, die Schicht auf der mit der semipermeablen Membran zu beschichtenden Seite 35 Masse-% oder mehr und 70 Masse-% oder weniger bezüglich der Gesamtmasse der Schicht auf der mit der semipermeablen Membran zu beschichtenden Seite und der Schicht auf der nicht mit der semipermeablen Schicht zu beschichtenden Seite beträgt, wobei ein Verfahren zum Delaminieren des Vliesstoffs ein Verfahren ist, bei dem die innere Bindungsfestigkeit einer Probe basierend auf den JAPAN-TAPPI-Verfahren zum Prüfen von Papier und Pulpe Nr. 18-2: 2000 "Paper and Board Paper - Method for Testing Internal Bond Strength, Teil 2: Internal Bond Tester Method" gemessen wird, wobei die Probe anschließend in zwei Schichten delaminiert wird, jeweils die Gewichte der delaminierten Proben gemessen werden und das Massenverhältnis bestimmt wird.

## Revendications

1. Tissu non tissé pour corps supportant une membrane semi perméable, qui est le tissu non tissé contenant des fibres synthétiques organiques en tant que composant primaire, où la membrane semi perméable est destinée à être portée par une surface du tissu non tissé, où
la fibre synthétique organique consiste en une fibre polyester ayant une longueur de 1 à 8 mm, et
le tissu non tissé est un tissu non tissé par voie humide soumis à un traitement à la presse à chaud, ayant une densité de 0,5 à 1,0 g/cm³, un grammage de 30 à 200 g/m², et
lorsque le tissu non tissé sur lequel la membrane semi perméable doit être posée comme un revêtement est sectionné dans la direction de l'épaisseur en une région de couche revêtue sur une face sur laquelle la membrane semi perméable doit être disposée, une région de couche centrale et une région de couche non revêtue qui est opposée à la surface sur laquelle la membrane semi perméable doit être disposée, le degré de fusion thermique des fibres synthétiques organiques dans la région de la couche centrale est inférieur au degré de fusion thermique des fibres synthétiques organiques dans la région de la couche revêtue et dans la région de couche non revêtue, où
lorsque le tissu non tissé sur lequel la membrane semi perméable doit être posée comme un revêtement est séparé en une couche sur une face de la surface revêtue de la membrane semi perméable et une couche sur la face de la surface non revêtue de la membrane semi perméable en délaminant le tissu non tissé en deux couches dans la direction de l'épaisseur, la couche sur la face de la surface revêtue de la membrane semi perméable est de 35 % en masse ou plus et de 70 % en masse ou moins par rapport au total de la couche sur la face de la surface revêtue de la membrane semi perméable et la couche sur la face de la surface non revêtue de la membrane semi perméable, où
un procédé pour délaminer le tissu non tissé est un procédé dans lequel la résistance des liaisons internes basée sur les méthodes de JAPAN TAPPI pour le test du papier et de la pulpe N° 18-2 : 200, « Méthodes des test de la résistance de liaison interne pour le papier et le carton - Partie 2 : Méthode au testeur de liaison interne » de l'échantillon est mesurée, l'échantillon est ensuite délaminé en deux couches, les poids des échantillons délaminés sont respectivement mesurés et le ratio des masses est obtenue, où
une surface quelconque du tissu non tissé peut servir de membrane semi perméable, et où
le tissu non tissé est constitué de fibres de polyester.

2. Tissu non tissé pour corps supportant une membrane semi perméable selon la revendication 1, dans lequel le tissu non tissé étant soumis à un traitement à la presse à chaud a une structure à une seule couche.

3. Tissu non tissé pour corps supportant une membrane semi perméable selon l'une quelconque des revendications 1 à 2, dans lequel les fibres synthétiques organiques comportent une fibre constituante principale, et la fibre constituante principale est une fibre constituante principale de type polyester.

4. Procédé de production d'un tissu non tissé pour un corps supportant une membrane semi perméable, qui est le tissu non tissé contenant des fibres synthétiques organiques en tant que composant primaire, où une membrane semi perméable est destinée à être portée par une surface du tissu non tissé, comportant les étapes de :
soumission d'une boue de fibres contenant les fibres synthétiques organiques au processus de fabrication de papier pour donner un papier humide dans lequel la fibre synthétique organique est constituée d'une fibre en polyester ayant une longueur de 1 à 8 mm.
séchage du papier humide sur un sécheur pour donner un papier de base en rouleau continu, et
soumission du papier de base à un traitement à la presse à chaud où les conditions de température pour le traitement à la presse à chaud sont dans la plage de 160 °C à 260 °C, dans lequel une différence dans les températures de surface est préréglée entre un rouleau supérieur et un rouleau inférieur d'un appareil de calandrage thermique, et la face de la surface du papier humide qui a reçu la plus grande quantité de chaleur provenant du sécheur avec le temps lorsque le papier humide a été porté dans un état complètement sec pendant le séchage du papier humide par le sécheur est mise en contact avec le rouleau préréglé à une température faible, pour donner un tissu non tissé, où
le tissu non tissé est constitué de fibres de polyester, où
la relation entre la quantité de chaleur fournie à la surface du papier de base et la quantité de chaleur fournie à la surface arrière lorsque le traitement à la presse à chaud est réalisé satisfait à la condition 1, où
le tissu non tissé est un tissu non tissé par voie humide ayant une densité de 0,5 à 1,0 g/cm3, un grammage de 30 à 200 g/m2 et une épaisseur de 30 à 400 µm, où
lorsque le tissu non tissé sur lequel une membrane semi perméable doit être posée comme un revêtement est sectionné dans la direction de l'épaisseur en une région de couche revêtue sur une face sur laquelle la membrane semi perméable doit être disposée, une région de couche centrale et une région de couche non revêtue qui est opposée à la surface sur laquelle la membrane semi perméable doit être disposée, le degré de fusion thermique des fibres synthétiques organiques dans la région de la couche centrale est inférieur au degré de fusion thermique des fibres synthétiques organiques dans la région de la couche revêtue et dans la région de couche non revêtue, et où
une surface quelconque du tissu non tissé peut être revêtue avec la membrane semi perméable :
(Condition 1), lorsque le tissu non tissé est séparé en une couche sur la face de la surface revêtue de la membrane semi perméable et une couche sur la face de la surface non revêtue de la membrane semi perméable en délaminant le tissu non tissé en deux couches dans la direction de l'épaisseur, la couche sur la face de la surface revêtue de la membrane semi perméable est de 35 % en masse ou plus et de 70 % en masse ou moins par rapport au total de la couche sur la face de la surface revêtue de la membrane semi perméable et la couche sur la face de la surface non revêtue de la membrane semi perméable, où un procédé pour délaminer le tissu non tissé est un procédé dans lequel la résistance sur des liaisons internes basée sur les méthodes de JAPAN TAPPI pour le test du papier et de la pulpe N° 18-2 : 200, « Méthodes des test de la résistance de liaison interne pour le papier et le carton - Partie 2 : Méthode au testeur de liaison interne » de l'échantillon est mesurée, l'échantillon est ensuite délaminé en deux couches, les poids des échantillons délaminés sont respectivement mesurés et le ratio des masses est obtenu.
